# FASCICULE DE BREVET EUROPEEN

(11) **EP 3 548 689 B1**
(45) Date de publication et mention de la délivrance du brevet: **17.04.2024**
(21) Numéro de dépôt: 17809290.4
(22) Date de dépôt: 05.12.2017
(51) Int. Cl.: E06B 9/30, F16B 5/02, F16B 5/06

(54) **PROCÉDÉ D'INSTALLATION D'UNE ARMATURE D'UN ÉQUIPEMENT DOMOTIQUE**
VERFAHREN ZUR INSTALLATION EINER RAHMENSTRUKTUR EINES TEILS EINER HEIMAUTOMATISIERUNGSAUSRÜSTUNG
METHOD FOR INSTALLING A FRAMEWORK STRUCTURE OF A PIECE OF HOME AUTOMATION EQUIPMENT

(30) Priorité: 05.12.2016 FR 1661905
(43) Date de publication de la demande: 09.10.2019
(73) Titulaire: SOMFY ACTIVITES SA, 74300 Cluses (FR)
(72) Inventeur: DUCRETET-PAJOT, Guillaume, 69100 Villeurbanne (FR); CACHAUD, Bruno, 16350 Champagne Mouton (FR); DUPIELET, Norbert, 74700 Sallanches (FR); NEGRELLO, Frédéric, 74300 Cluses (FR); PERACHE, Jean-Michel, 74440 Taninges (FR); GUEDON, Pierre, 69570 Dardilly (FR)
(74) Mandataire: Bugnion Genève
(86) Numéro de dépôt international: PCT/EP2017/081574
(87) Numéro de publication internationale: WO 2018/104335

(56) Documents cités:
- EP-A1- 0 860 615
- DE-U1-202014 007 350
- US-A- 874 311
- US-A1- 2004 056 167
- US-A1- 2007 187 566
- US-A1- 2013 284 383

## Description

### Domaine technique

La présente invention est dirigée vers un procédé d'installation sur une paroi d'une armature d'un équipement domotique. Elle concerne un système de fixation d'équipement domotique. Le système de fixation comprend en particulier une fixation ajustable de manière à régler le positionnement de l'équipement par rapport à ses points d'accrochage. L'invention concerne également un équipement domotique comprenant un tel système ainsi qu'une méthode de réglage de la position d'un tel équipement.

### Etat de la technique

Lors de l'installation d'équipements domotiques, l'alignement des différentes parties des équipements est essentiel à leur bon fonctionnement. Les équipements domotiques désignent, entre autres, les dispositifs de protection des issues d'un bâtiment. Ces dispositifs peuvent prendre la forme de stores, de rideaux, ou de volets, et peuvent être enroulables ou dépliables, de manière à prendre des positions escamotée ou rétractée, déployée, ou intermédiaires. De tels équipements domotiques comprennent souvent des éléments mobiles et des éléments de guidage. Il est donc important que les éléments mobiles soient bien alignés par rapport aux éléments de guidage, de manière à éviter les disfonctionnements ou une usure prématurée des pièces. Cet alignement concerne au moins deux directions orthogonales.

Les équipements domotiques peuvent être encombrants, ce qui rend leur installation parfois difficile. En l'occurrence, l'alignement des pièces mobiles par rapport aux éléments de guidage ou par rapport aux dimensions de l'ouverture à protéger, peut être malaisé. Lors de l'installation, il est donc nécessaire de prévoir des moyens d'ajustement pour permettre de compenser les éventuelles imprécisions dans les différentes opérations d'installation, comme par exemple le perçage de la paroi sur laquelle est installé l'équipement domotique. Le brevet US874311 décrit une installation de protection solaire, comprenant des cadres montés sur une paroi, dans lesquels peuvent coulisser des supports formant un châssis de l'armature de la protection solaire, permettant d'ajuster latéralement le store par rapport à la fenêtre. Les cadres et les supports sont munis de perçages, qui permettent de fixer le store de manière discrète, en différentes positions par rapport aux cadres.

L'ajustement de l'armature n'est possible que suivant une seule direction, le châssis de l'armature étant elle-même uniquement mobile en translation par rapport aux cadres.

Un autre procédé d'installation sur une paroi d'une armature d'un équipement domotique est connu par le document US 2013/284383 A1.

Il y a donc matière à développer des équipements domotiques dont l'installation est facilitée, permettant à une personne seule de maintenir un châssis de l'armature d'un store et de l'ajuster dans au moins deux directions avant de verrouiller ces ajustements.

### Exposé de l'invention

La présente invention permet de pallier les inconvénients précités grâce à un procédé d'installation sur une paroi de l'armature d'un équipement domotique, comprenant un système de fixation ajustable comportant au moins un support et un dispositif de maintien, le support étant apte à être solidarisé à la paroi, l'armature comprenant un châssis et au moins deux fixations ajustables comprenant chacune un dispositif de connexion mécanique comportant un dispositif d'ajustement et un dispositif de verrouillage, l'armature comprenant également un dispositif d'accrochage coopérant avec le dispositif de maintien du support, le dispositif d'ajustement permettant un ajustement du châssis de l'armature suivant au moins deux directions orthogonales par rapport au support. Le procédé comprend selon l'invention les étape successives suivantes :
a) fixer au moins un support à la paroi,
b) connecter le dispositif d'accrochage de l'armature sur le dispositif de maintien du support correspondant, le châssis de l'armature se trouvant ainsi auto-supporté par le support,
c) ajuster la position d'une première fixation ajustable suivant deux directions par rapport à un premier support, et
d) verrouiller la position de la première fixation ajustable par rapport au châssis de l'armature.
l'étape de verrouillage étant une étape de serrage de la fixation ajustable contre le châssis de l'armature et du châssis de l'armature contre la paroi.

Le procédé d'installation peut en outre comprendre les étapes suivantes :
e) ajuster la position d'une deuxième fixation ajustable suivant deux directions, et
f) verrouiller la position de la première fixation ajustable par rapport au châssis de l'armature.

'L'armature installée par le procédé selon l'invention comprend un châssis, au moins un support muni d'un dispositif de maintien et au moins deux fixations ajustables, lesquelles comprennent des éléments mobiles en translation suivant au moins deux directions orthogonales par rapport à l'armature. De plus, l'armature comprend également un dispositif de connexion mécanique comprenant un dispositif d'accrochage coopérant avec un dispositif de maintien du support, pour supporter le châssis de l'armature de l'équipement domotique sur la paroi avant son ajustement. L'utilisation du dispositif d'accrochage facilite la suspension de l'équipement domotique sur la paroi, qui peut être effectuée, éventuellement, par une seule personne.

Une fois suspendu, l'équipement peut être repositionné par rapport à l'environnement grâce aux fixations ajustables. De manière avantageuse, les fixations ajustables se centrent automatiquement sur les supports d'une paroi. Ensuite, le châssis de l'armature de l'équipement domotique peut être décalé selon plusieurs axes de direction avant d'être définitivement fixé.

L'armature se caractérise plus particulièrement par les éléments suivants :
L'armature comprend un système de fixation ajustable, lequel comporte au moins un support et un dispositif de maintien et le support est apte à être solidarisé à la paroi.

L'armature comprend un châssis et au moins deux fixations ajustables comprenant chacune un dispositif de connexion mécanique. Les dispositifs de connexion mécanique comportent un dispositif d'ajustement et un dispositif de verrouillage.

L'armature comprend un dispositif d'accrochage coopérant avec le dispositif de maintien du support. Le dispositif d'ajustement permet un ajustement du châssis de l'armature suivant au moins deux directions orthogonales par rapport au support.

Le ou les supports comportent un axe de support et un dispositif de maintien.

Les fixations ajustables peuvent comprendre chacune :
- un cadre de support,
- un dispositif d'ajustement lié au cadre de support et comportant des éléments mobiles en translation suivant au moins deux directions orthogonales par rapport au châssis de l'armature,
- et un dispositif de verrouillage.

L'armature peut en outre comprendre :
- Au moins deux supports comportant chacun un axe de support et un dispositif de maintien, les supports étant aptes à être solidarisés à la paroi,
- et au moins deux fixations ajustables comprenant chacune :
- un cadre de support,
- un dispositif de connexion mécanique,
- un dispositif de verrouillage,
et tel que le dispositif de connexion mécanique comporte un dispositif d'accrochage coopérant avec le dispositif de maintien du support, et un dispositif d'ajustement lié au cadre de support et comportant des éléments mobiles en translation par rapport au cadre de support.

Le cadre de support de l'armature est mobile en translation par rapport au châssis de l'armature et le dispositif de verrouillage est apte à bloquer le mouvement du cadre de support par rapport au châssis de l'armature.

Le dispositif de maintien du support comprend un élément au moins partiellement fileté fixé à la paroi. Le dispositif de verrouillage comprend un élément taraudé permettant de serrer le cadre de support sur le châssis de l'armature. Dans ce cas, l'élément fileté est de préférence un écrou, vissé sur le dispositif de maintien du support suivant la direction de l'axe du support de manière serrer le cadre de support en direction du châssis de l'armature et en direction de la paroi.

Le châssis comprend de préférence au moins deux rails se faisant face et à distance l'un de l'autre, le cadre de support étant monté coulissant dans les deux rails suivant deux directions orthogonales.

Le cadre de support peut comprendre une ouverture s'étendant à partir d'un bord du cadre de support permettant d'accommoder une première partie de l'axe de support.

Le dispositif d'accrochage de l'armature peut être sous la forme d'un évidement dans l'épaisseur du premier cadre de support, permettant d'accommoder au moins partiellement une deuxième partie de l'axe de support.

L'armature peut comprendre au moins deux supports aptes à être solidarisés à la paroi et deux fixations ajustables coopérant chacune avec un support.

### Brève description des dessins

Figures 1a, 1b, 1c : schéma explicatif de l'installation de l'armature sur une paroi où la figure 1a montre l'approche du châssis de l'armature vers la paroi, sur laquelle sont positionnés les supports, de manière à connecter le châssis de l'armature aux supports correspondant, la figure 1b illustre l'opération de verrouillage, et la figure 1c illustre la fixation d'autres éléments de l'équipement domotique sur l'armature.
Figures 2a, 2b, 2c : exemple de fixation ajustable selon un premier mode de réalisation, où les figures 2a et 2b illustrent deux versions d'un moyen d'accrochage par liens, et la figure 2c montre un exemple de système de verrouillage par serrage.
Figures 3a, 3b, 3c : exemple de fixation ajustable selon un second mode de réalisation, où la figure 3a montre une vue éclatée du système de fixation, comprenant un support et une fixation ajustable, où la figure 3b montre une autre vue éclatée du même système de fixation, et où la figure 3c montre une coupe longitudinale de la fixation ajustable, assemblée avec le châssis de l'armature et connectée au support.
Figures 4a, 4b, 4c : exemple de fixation ajustable selon un troisième mode de réalisation, où les figures 4a et 4b illustrent un moyen d'accrochage par crans, et la figure 4c montre un exemple de système de verrouillage par serrage.
Figures 5a, 5b : exemple de fixation ajustable selon un quatrième mode de réalisation, où les figures 5a et 5b illustrent un moyen d'accrochage par vis et écrou.
Figures 6a, 6b: exemple de fixation ajustable selon un cinquième mode de réalisation, où les figures 6a et 6b illustrent un moyen d'accrochage par emboîtement.
Figures 7a, 7b : exemple de fixation ajustable selon un sixième mode de réalisation, où les figures 7a et 7b illustrent un moyen d'accrochage magnétique.

### Description détaillée de l'invention

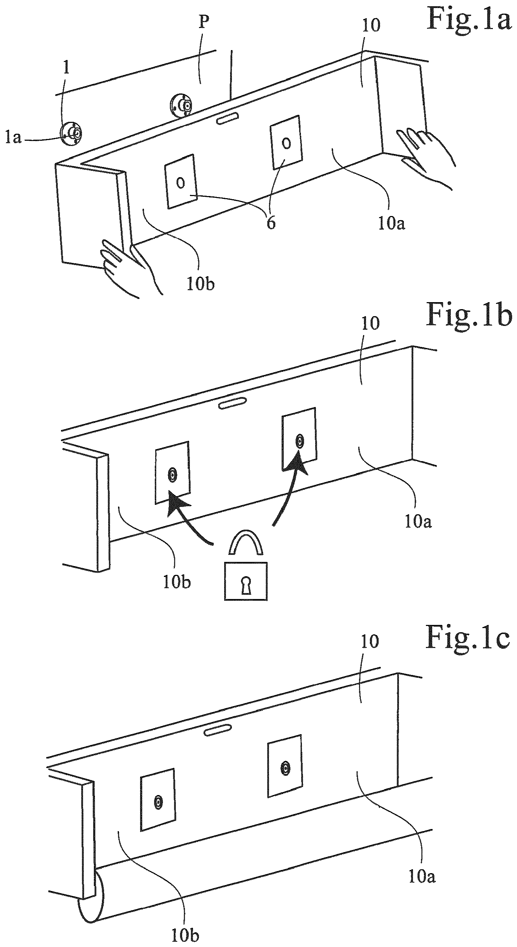

L'armature qui peut être installée par le procédé d'installation selon l'invention et qui sera décrite ci-dessous comprend un châssis 10c et un système de fixation ajustable S. Un tel système de fixation ajustable permet la suspension d'un équipement domotique sur une paroi P, en particulier la fixation du châssis 10c de l'armature 10, ainsi que le réglage de son positionnement. Le châssis 10c de l'armature 10 de l'équipement domotique peut être réalisée par un ensemble de deux cornières allongées 100, assemblées l'une à l'autre (non représentées). Une cornière est un profilé métallique ou plastique dont la section forme un L, présentant ainsi deux ailes à angle droit. De préférence, les deux cornières, notamment les ailes des cornières en vis-à-vis, ne sont pas jointives, leur assemblage forme donc ainsi un rail au moins partiellement ouvert sur deux de ses faces opposées. Alternativement, le châssis 10c de l'armature 10 peut être réalisé à partir d'une pièce allongée ayant une section en forme de C. Le rail ainsi formé n'est ouvert que sur une de ses faces, mais des ouvertures peuvent être prévues sur la face opposée pour la fixation de l'armature 10 à la paroi P. Alternativement, le châssis 10c de l'armature 10 peut être réalisé à partir de deux cornières présentant chacune une section en forme de C, les ouvertures des deux cornières se faisant face. Le système de fixation ajustable S comprend au moins un support 1, de préférence au moins 2 supports 1, fixé de manière inamovible à la paroi P, comme indiqué par exemple dans la figure 1a, et au moins deux fixations ajustables 6. Les fixations ajustables 6 sont disposées sur l'équipement domotique, ou intégrées à l'équipement domotique. Les fixations ajustables 6 sont en particulier liées au châssis 10c de l'armature 10 d'un équipement domotique, autrement dit intégrées dans le rail formé par le châssis 10c de l'armature 10. La paroi P peut être un mur vertical ou le plafond d'une pièce, ou le rebord supérieur de l'encadrement d'une ouverture de bâtiment, telle qu'une porte, une fenêtre ou une baie vitrée.

Un support 1 contient de préférence un axe de support 1a disposé perpendiculairement à la paroi P et une platine de support 1b s'étendant dans un plan sensiblement perpendiculairement à l'axe de support 1a. Un support 1 peut être fixé à la paroi P par exemple par l'intermédiaire de la platine de support 1b, qui peut être munie d'un ou plusieurs trous permettant le passage de vis. D'autres moyens de fixation usuels peuvent être utilisés, par exemple le support peut être creux, et fixé par le biais d'une vis à la paroi, la vis pénétrant dans le creux du support. L'extrémité libre de l'axe du support 1b est destinée à coopérer avec la fixation ajustable 6 de l'armature 10 d'un dispositif domotique ou avec un dispositif d'accrochage 31 de l'armature. L'extrémité libre de l'axe du support 1b est de préférence biseautée, de manière à faciliter la mise en place de la fixation ajustable 6 ou du dispositif d'accrochage 31 sur le support 1, notamment dans le cas d'éventuels désalignements entre la fixation ajustable 6 ou du dispositif d'accrochage 31 et le support 1.

L'axe du support 1b est pourvu d'un dispositif de maintien M, permettant de retenir la fixation ajustable 6, une fois connectée au support 1. Dans le premier mode de réalisation, le dispositif de maintien M comprend une lèvre 11a parcourant la circonférence de l'axe du support 1a, proche de l'extrémité libre de l'axe du support 1a. La lèvre 11a peut être continue ou discontinue. Dans le premier et le deuxième mode de réalisation, le dispositif de maintien M comprend une rainure 11b, aménagée sur la circonférence de l'axe du support 1a, destinée à retenir la fixation ajustable 6.

Les fixations ajustables 6 comprennent chacune un cadre de support 2. Le cadre de support 2 peut être mobile par rapport au châssis 10c de l'armature 10 ou solidaire du châssis 10c de l'armature 10 de l'équipement domotique, et délimite une zone aménagée dans l'armature 10. Le cadre de support 2 peut être rendu solidaire du châssis 10c de l'armature 10 par tout moyen de fixation adéquat. Il peut par exemple être clippé dans une épaisseur de l'armature 10, ou vissé sur une surface du châssis 10c de l'armature 10, ou collé ou soudé. Le cadre de support 2 délimite de préférence une zone carrée ou rectangulaire dans le châssis 10c de l'armature 10, suivant les axes principaux longitudinal x et transversal y de l'armature 10. Le cadre de support 2 est partiellement bloqué selon au moins un degré de liberté, par le châssis 10c de l'armature elle-même, notamment par les ailes en L ou en C en vis-à-vis des cornières 100 formant le châssis 10c de l'armature 10 ou par toute autre pièce prévue à cet effet. L'armature comprend un dispositif de connexion mécanique 3, permettant de connecter de manière amovible le châssis 10c de l'armature 10 sur un support 1 de la paroi P avant d'en régler la position par rapport à ce support 1. Le dispositif de connexion mécanique 3 comporte le dispositif d'accrochage 31 qui coopère avec l'axe de support 1a correspondant pour établir la connexion mécanique entre le support 1 et le châssis 10c de l'armature 10.

Les fixations ajustables comprennent également un dispositif d'ajustement 32. Le dispositif d'ajustement 32 comporte des éléments mobiles en translation permettant d'ajuster la position relative du châssis 10c de l'armature 10 par rapport au support 1. Les éléments mobiles permettent de préférence de déplacer le châssis 10c de l'armature 10 selon deux axes de direction parallèles à la paroi P, orthogonaux entre eux et perpendiculaire à l'axe du support 1a. Il est cependant possible d'envisager que les éléments mobiles du dispositif d'ajustement 32 permettent d'ajuster la position du châssis 10c de l'armature 10 par rapport au support 1 selon également une troisième direction.

Les dispositifs d'ajustement 32 forment un ensemble lié avec le cadre de support 2.

Les fixations ajustables 6 comprennent chacune un dispositif de verrouillage 4, permettant de maintenir la position du châssis 10c de l'armature 10 par rapport aux supports 1 une fois réglées. En particulier, le dispositif de verrouillage 4 permet de bloquer la translation des pièces mobiles du dispositif d'ajustement 32 ou le cadre de support lui-même dans le cas où il est mobile. La translation des pièces mobiles du dispositif d'ajustement 32 peut être empêchée par blocage du mouvement de ces pièces mobiles les unes par rapport aux autres, notamment une fois le dispositif d'accrochage 31 connecté à l'axe du support 1a. Dans le premier mode de réalisation, le dispositif de verrouillage 4 coopère avec le support 1 et le dispositif d'accrochage 31. Dans le deuxième mode de réalisation, le dispositif de verrouillage 4 peut bloquer les pièces mobiles du dispositif d'ajustement 32 en empêchant leur mouvement de translation par rapport au cadre de support 2. Dans ce cas, le dispositif de verrouillage 4 coopère avec le dispositif d'ajustement 32 et le cadre de support 2, indépendamment du support 1, ce qui permet de conserver le réglage même en cas de démontage du châssis 10c de l'armature par rapport aux supports 1. Dans ce cas, le système de fixation ajustable selon un exemple de réalisation permet de déconnecter le châssis 10c de l'armature 10 des supports sans déverrouiller le dispositif de verrouillage 4. Le réglage des alignements peut ainsi être conservé pour une remise en place du châssis 10c de l'armature 10 rapide. Le dispositif de verrouillage 4 peut également bloquer la mobilité du cadre de support 2 par rapport au châssis 10c de l'armature 10 ou une cornière 100 de l'armature 10, dans le cas où il est prévu que le cadre de support 2 puisse être mobile par rapport au châssis 10c de l'armature 10.

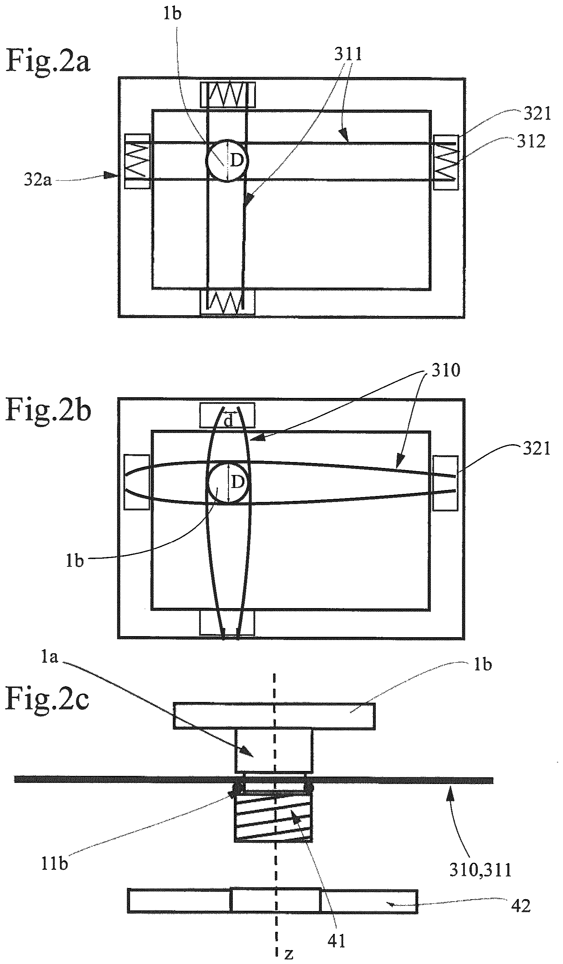

Les figures 2a, 2b, 2c représentent un premier mode de réalisation d'un système de fixation ajustable S. Le support 1 comprend un axe de support 1a orienté perpendiculairement à la paroi P, selon la direction z, et une platine de support 1b. L'axe du support 1a est pourvu d'une rainure circulaire 11b sur sa circonférence, permettant d'accueillir le dispositif d'accrochage 31 de la fixation ajustable 6. Le dispositif d'accrochage 31 est en particulier un dispositif d'accrochage 31a comportant deux paires de liens parallèles et flexibles 310, tels qu'illustré à la figure 2b. Les liens de chaque paire sont séparés par une distance d inférieure au diamètre D de l'axe du support 1b. Les liens 310 sont orientés perpendiculairement à l'axe z. Les paires de liens 310 peuvent être orthogonales l'une à l'autre, et orientées suivant les directions x et y. Le dispositif d'accrochage 31a permet la connexion mécanique avec l'axe du support 1b grâce à la déformation élastique des liens 310 autour de l'axe du support 1b et leur positionnement dans la rainure 11b de l'axe du support 1b par effet ressort. L'axe du support 1b peut être avantageusement biseauté à son extrémité de manière à favoriser son insertion entre les paires de liens 310.

Alternativement, les paires de liens flexibles 310, peuvent être remplacés par des paires de liens rigides 311, tels qu'illustrés dans la figure 2a. Les liens rigides 311 sont maintenus à une distance d inférieure au diamètre D de l'axe du support 1b par deux ressorts de rappel 312. Les ressorts de rappel 312 peuvent être disposés aux extrémités des liens 311. Ils s'étirent au passage des liens 311 autour de l'axe du support 1b et repositionnent automatiquement les liens 311 dans la rainure 11b de l'axe du support 1a grâce à leur force de rappel.

Le dispositif d' ajustement 32 selon cette disposition est en particulier un dispositif d' ajustement 32a qui comprend des socles 321 liés au cadre de support 2 et mobiles en translation par rapport au cadre de support 2. Les socles sont en particulier au nombre de 4 et sont chacun disposés sur un coté du cadre de support 2. Les liens parallèles 310, 311 sont fixés deux à deux à chacune de leurs extrémités sur un socle 321. Dans le cas où les liens sont flexibles, ils peuvent être fixés aux socles 321 de façon non mobile. En d'autres termes, les liens flexibles sont rendus solidaires des socles 321 par tout moyen de fixation rigide. Ils peuvent être par exemple enserrés par une platine métallique (non représentée) vissée sur le socle 321, moulés directement dans le socle 321, ou insérés dans des trous du socle 321 prévus à cet effet. D'autres moyens de fixation peuvent également être utilisés.

Lorsque les liens 311 sont maintenus par des ressorts de rappel 312, leurs extrémités sont mobiles par rapport aux socles 321. Autrement dit, les ressorts de rappels 312 sont solidaires des socles 321, et assurent la liaison entre les liens 311 et les socles 321.

Chaque paire de liens 310, 311 peut être déplacée par rapport au cadre de support 2 soit dans la direction longitudinale x soit dans la direction transversale y, grâce à la mobilité des socles 321 sur le cadre de support 2. Pour ce faire, chaque socle 321 peut être inséré dans une rainure aménagée dans le cadre de support 2 de manière à coulisser librement dans l'une ou l'autre des directions longitudinale x ou transversale y. D'autres types de liaisons mécaniques peuvent également être utilisés par l'homme du métier pour maintenir les socles 321 en relation avec le cadre de support 2.

Chaque côté du cadre de support 2 comporte un socle 321, et les socles opposés maintiennent une paire de liens 310, 311. L'ajustement du châssis 10c de l'armature 10 de l'équipement domotique est effectué grâce à la translation de l'une ou des deux paires de socles 321, permettant ainsi de repositionner l'axe du support 1b le long des liens 310, 311.

Le verrouillage de la position du châssis 10c de l'armature 10, une fois réglée, peut être effectué par pincement des liens 310, 311 sur le support 1. Pour ce faire, le dispositif de verrouillage 4 comprend un élément fileté, coopérant avec l'extrémité de l'axe du support 1a de manière à serrer simultanément les paires de liens 310, 311 sur l'axe du support 1a. De préférence, l'extrémité de l'axe de support 1b est elle-même filetée pour permettre le serrage d'une rondelle 42 large et plate, la tête plate de la rondelle venant comprimer les liens 310, 311 sur un bord de la rainure 11b dans laquelle ils sont maintenus et inhibe ainsi leurs mouvements par rapport à l'axe du support 1a. Selon un autre mode de réalisation possible, une pièce coulissante (non représentée) peut être prévue sur les liens 310, 311, avec possibilité de coulissement sur chaque paire de liens 310, 311. Cette pièce coulissante comprend une ouverture centrale, d'un diamètre légèrement supérieur au diamètre D de l'axe de support 1a. Le verrouillage de la position du châssis 10c de l'armature 10, une fois réglée, peut être effectué par pincement de cette pièce coulissante sur le support 1, ce pincement ayant pour effet supplémentaire de pincer les liens entre eux, empêchant ainsi le mouvement du cadre de support 2 sur le support 1.

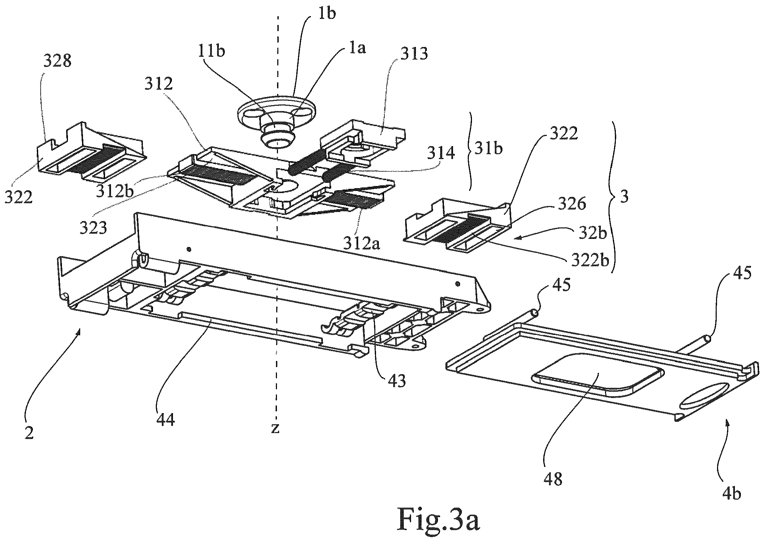

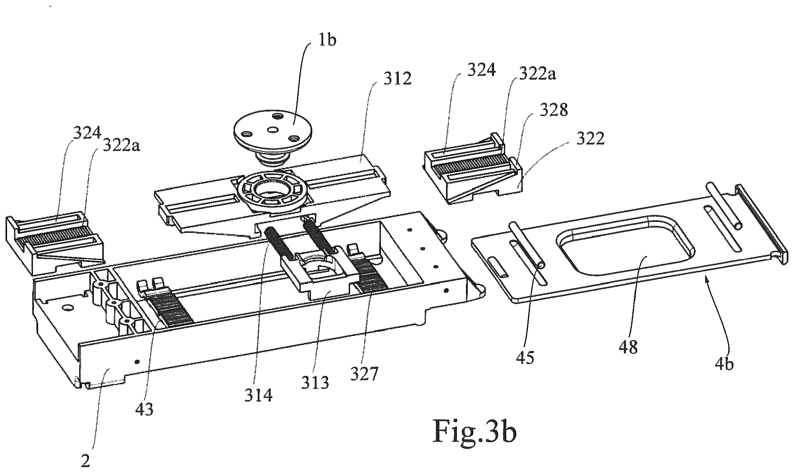

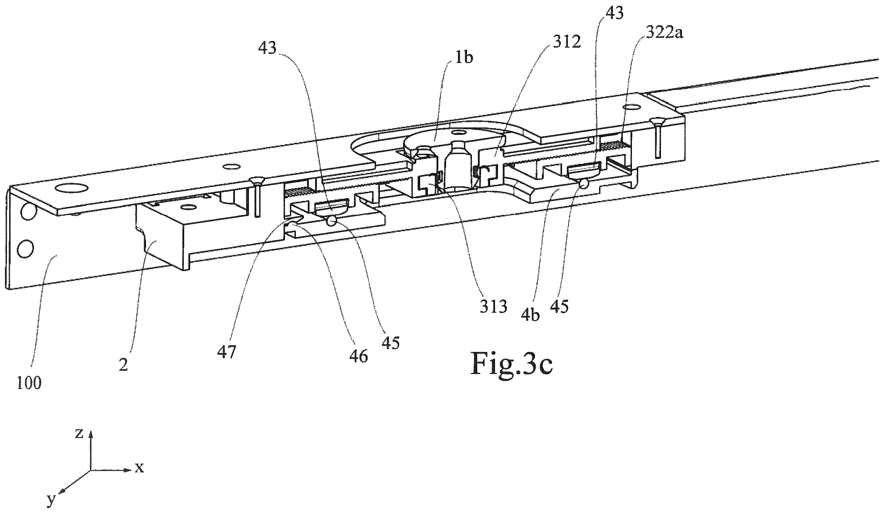

Les figures 3a et 3b représentent un second mode de réalisation d'un système de fixation ajustable. Le support 1 est constitué d'un axe de support 1a orienté perpendiculairement à la paroi P, selon la direction z, et une platine de support 1b. L'axe du support 1a est pourvu d'une rainure circulaire 11b sur sa circonférence, permettant d'accueillir le dispositif d'accrochage 31 de la fixation ajustable 6. Le dispositif d'accrochage 31 est en particulier un dispositif d'accrochage 31b, comprenant une platine 312 percée d'un trou d'un diamètre suffisant pour être insérée sur l'axe du support 1a, et une pièce de clippage 313, également percée d'un trou d'un diamètre suffisant pour être insérée sur l'axe du support 1a. Le diamètre des trous aménagés dans la platine 312 et la pièce de clippage 313 peut être égal ou différent. Il est de préférence égal pour la platine 312 et la pièce de clippage 313 et supérieur au diamètre D de l'axe de support 1a d'une valeur comprise entre 0,1 cm et 1 cm. La platine 312 et la pièce de clippage 313 sont combinées de manière à ce que leurs trous respectifs coïncident et permettent l'insertion des deux pièces 312, 313 sur l'axe du support 1a.

La pièce de clippage 313 peut être rendue solidaire à la platine 312 selon un axe z grâce à un logement aménagé dans l'épaisseur de la platine 312 où la pièce de clippage 313 peut être insérée. En d'autres termes, la pièce de clippage garde une mobilité partielle par rapport à la platine 312 selon l'un des axes longitudinal x ou transversal y, et perd toute mobilité par rapport à la platine 312 selon l'axe z.

Un ou plusieurs ressorts 314 sont disposés entre la pièce de clippage 313 et la platine 312 de manière à maintenir au repos du ou des ressorts un décalage entre les trous de la pièce de clippage 313 et la platine 312 selon l'un des axes longitudinal x ou transversal y. Le trou de la pièce de clippage 313 est aligné avec celui de la platine 312 contre la force du ressort, au moment de l'insertion de l'axe du support 1a à travers les deux pièces 312, 313 préalablement assemblées. Les ressorts 314 permettent de décaler automatiquement la pièce de clippage 313 dans la rainure 11b de l'axe du support 1a, une fois les pièces d'accrochage insérées sur l'axe de support 1a. Alternativement, la rainure circulaire 11b aménagée dans l'axe du support 1a peut être remplacée par un chanfrein facilitant l'insertion de la pièce de clippage 313 sur le support 1.

Le dispositif d' ajustement 32 selon cette disposition est en particulier un dispositif d' ajustement 32b comprenant deux pièces intermédiaires 322 coopérant d'une part avec le cadre de support 2 et d'autre part avec la platine 312. A cet effet, la platine 312 est munie de deux zones crantées 312a, 312b, s'étendant selon un axe parallèle à l'axe longitudinal x du cadre de support 2 et disposées sur la face apparente de la platine 312. La face apparente s'entend comme la face visible par l'installateur lorsque la platine 312 est connectée à l'axe du support 1a. Les zones crantées 312a, 312b forment chacune une surépaisseur délimitée latéralement par deux surfaces planes 323 et coopèrent chacune avec une première zone crantée 322a aménagée sur la face arrière des pièces intermédiaires 322. La face arrière des pièces intermédiaires 322 s'entend comme la face non visible par l'installateur, venant se placer en vis-à-vis de la face apparente de la platine 312, où sont disposées les zones crantées 312a, 312b. La première zone crantée 322a de la face arrière d'une pièce intermédiaire 322 est bordée latéralement par deux surfaces planes 324 en surépaisseur destinées à venir en contact avec les surfaces planes 323 qui délimitent la zone crantée 312a, 312b correspondante de la platine 312. La première zone crantée 322a des pièces intermédiaires 322 et la zone crantée 312a, 312b correspondante de la platine 312, lorsqu'elles sont en contact serré l'une avec l'autre, permettent d'éviter le glissement respectif des pièces intermédiaires 322 par rapport à la platine 312. Les surfaces planes 323,324 délimitant les zones crantées de la platine 312 et la première zone crantée 322a des pièces intermédiaires 322, suppriment quant à elles tout mouvement latéral des pièces intermédiaires 322 par rapport à la platine 312, et se comportent comme des glissières. Lorsque le contact est plus lâche, les pièces intermédiaires 322 peuvent rester mobiles en translation par rapport à la platine 312 selon l'axe longitudinal x du cadre de support 2, tout en étant bloquées latéralement par la coopération des surfaces planes 323,324. En d'autres termes, la translation peut être permise suivant l'axe longitudinal x et bloquée suivant l'axe transversal y. Les zones crantées 312a, 312b et les premières zones crantées 322a des pièces intermédiaires 322 comportent des rainures parallèles orientées perpendiculairement à l'axe longitudinal x. En contact serré, les rainures des zones crantées 312a, 312b peuvent alors s'imbriquer avec celles de la première zone crantée 322a des pièces intermédiaires 322 et bloquer leur mobilité. Une lèvre de maintien 328 peut accessoirement être disposée sur la pièce intermédiaire 322 de manière à venir en butée avec le bord de la platine 312 et limiter ainsi toute translation exagérée de la pièce intermédiaire 322 dans la direction allant d'une extrémité de la platine 312 vers sa partie centrale.

Les pièces intermédiaires 322 comportent chacune une seconde zone crantée 322b sur leur face visible, délimitée par deux surfaces planes 326, et orientée perpendiculairement par rapport à la première zone crantée 322a. La seconde zone crantée 322b coopère avec une zone crantée 327 disposée sur le cadre de support 2. Les deux surfaces planes 326 sont disposées de manière à encadrer la zone crantée 327 du cadre de support 2. L'ensemble de la platine 312 et des pièces intermédiaires 322 peut alors rester mobile par rapport au cadre de support 2 suivant l'axe transversal y tout en restant bloqué suivant l'axe longitudinal x par rapport au cadre de support 2 par l'effet des surface planes 326. Lors d'un contact plus serré, les pièces intermédiaires 322 s'immobilisent sur le cadre du support 2 grâce à la coopération de leur seconde zone crantée 322b avec la zone crantée 327 correspondante du cadre de support 2.

Grâce aux pièces intermédiaires 322, la platine 312 est mobile par rapport au cadre de support 2 selon les deux axes longitudinal x et transversal y. Cela permet d'ajuster la position du châssis 10c de l'armature 10 par rapport à l'axe 1a du support 1 avant de verrouiller le système de fixation ajustable. Le cadre de support 2 selon cet arrangement est pourvu de traverses souples 43 chacune superposable à une pièce intermédiaire 322. Le cadre de support 2 est également pourvu d'un système de glissière 44 permettant d'insérer le dispositif de verrouillage 4b. Le dispositif de verrouillage 4b peut être muni de deux bossages 45. Lorsque le dispositif de verrouillage 4b est inséré dans le système de glissières 44 jusqu'à sa position de verrouillage, chacun des bossages 45 appuie sur la traverse souple correspondante 43 de manière à resserrer le contact des zones crantées 312a, 312b de la platine 312 avec la première zone crantée 322a des pièces intermédiaires 322 et celui de la seconde zone intermédiaire 322b avec la zone crantée 327 du cadre de support 2.

De préférence, la zone crantée 327 est disposée directement sur la traverse souple 43 et la surface plane 326 des pièces intermédiaires 322 encadrent les traverses 43. Alternativement, la zone crantée 327 est disposée sur une pièce de liaison, elle-même fixée sur la traverse souple 43.

Optionnellement, le système de fixation ajustable S contient une sécurité supplémentaire, permettant de maintenir le dispositif de verrouillage 4 en place.

Cette sécurité supplémentaire se présente sous la forme d'un élément de clippage 46 permettant de maintenir le dispositif de verrouillage 4b en place. L'élément de clippage 46 coopère notamment avec une languette de clippage 47 solidaire du cadre de support 2. La languette de clippage 47 est souple, de telle manière à s'effacer au passage du dispositif de verrouillage 4b, et à revenir en position dès lors que le dispositif de verrouillage 4b est en place. L'extrémité libre de la languette de clippage 47 peut avoir de manière avantageuse une forme biseautée. La languette de clippage 47 comprend une forme complémentaire de l'élément de clippage 46 et permet ainsi de maintenir le dispositif de verrouillage 4b en position.

Optionnellement, le dispositif de verrouillage 4b est pourvu d'une fenêtre 48, permettant l'accessibilité à l'axe du support 1a et à la pièce de clippage 313. La fenêtre 48 du dispositif de verrouillage 4b permet de déconnecter le châssis 10c de l'armature 10 des supports 1 sans pour autant modifier le réglage des fixations ajustables 6. Le châssis 10c de l'armature 10 peut être facilement déconnecté du support 1, en faisant bouger l'élément de clippage 313 contre la force des ressorts 314, de manière à aligner les trous de la platine 312 et de l'élément de clippage 313. Il suffit alors de tirer sur le châssis 10c de l'armature 10 pour le désolidariser du support 1.

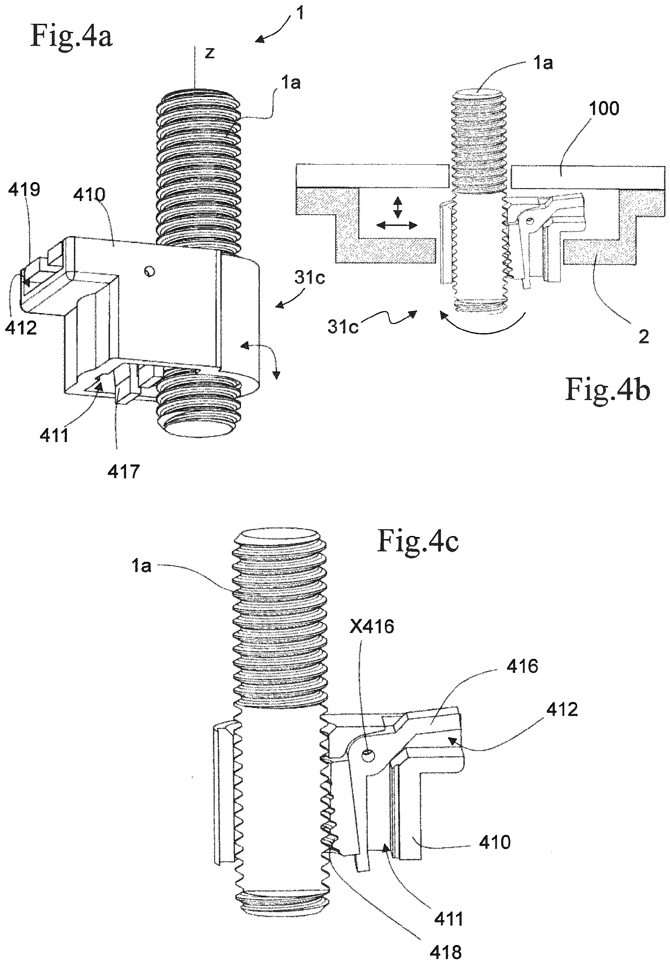

Les figures 4a, 4b, 4c illustrent un détail d'un troisième mode de réalisation d'un système de fixation ajustable. Le support 1 est constitué d'un axe de support 1a orienté perpendiculairement à la paroi P, selon la direction z. L'axe de support 1a est un arbre comprenant un filetage 401 permettant de coopérer avec le dispositif d'accrochage 31 de la fixation ajustable 6. Le dispositif d'accrochage 31 est en particulier un dispositif d'accrochage 31c, comprenant une pièce d'accrochage 410 laquelle supporte un levier à crans 416. Le levier à crans 416 comprend une première patte 417, munie de crantages 418 et une deuxième patte 419 reliée à la première et formant un angle avec celle-ci le long d'un axe X416. Le levier à crans 416 est mobile en rotation autour de l'axe X416 par rapport à la pièce d'accrochage 410. La pièce d'accrochage 410 comprend une première zone de réception 411 de l'axe de support 1a et de la première patte 417 du levier et une deuxième zone 412 de réception de la deuxième patte 419 du levier.

La pièce d'accrochage 410 peut être montée dans un cadre de support 2, la pièce d'accrochage 410 étant montée mobile par rapport du châssis 10c de l'armature suivant deux directions orthogonales (par exemple montée folle dans un logement formé entre le cadre de support et le châssis) ou en remplacement de la pièce de clippage 313 et des ressorts 314 du mode de réalisation précédent.

Lors de l'installation de l'armature 10 à la paroi P, la pièce d'accrochage 410 est insérée autour du support 1 et le levier est basculé par action sur la deuxième patte 419. Une fois le châssis 10c de l'armature positionné selon la direction de l'axe du support 1a, le levier est de nouveau basculé en sens inverse, de sorte que les crantages 418 de la première patte du levier 416 coopèrent avec le filetage 401 du support 1. L'action sur la deuxième patte du levier et son retour en position pourraient alternativement être réalisée sous l'action élastique d'un ressort (non représenté), les crantages 419 étant alors orientés de sorte à forcer le basculement du levier 416 lorsque le châssis 10c de l'armature 10 est déplacé vers la paroi P.

La coopération des crantages de la première patte du levier 416 et du filetage 401 du support 1 permet de maintenir le châssis 10c de l'armature suspendu au support 1. L'ajustement de la position du châssis 10c de l'armature peut alors être réalisé soit par coulissement du cadre de support 2 dans le châssis 10c de l'armature, soit en utilisant le dispositif d'ajustement décrit en référence au troisième mode de réalisation.

Le dispositif de verrouillage 4 consiste alors en un écrou simple 422, qui vient serrer l'ensemble des pièces mobiles contre le châssis 10c de l'armature 10 ou contre la paroi P. Alternativement, une rotation, par exemple d'un demi-tour de vissage de la pièce d'accrochage 410 permet de serrer l'ensemble des pièces mobiles entre elles, par coopération en rotation des crantages 419 avec le filetage 401 de l'axe de support 1a. Un démontage et réajustement sera possible en effectuant un demi-tour de dévissage de la pièce d'accrochage 410 par rapport à l'axe de support 1a et en faisant basculer le levier pour libérer les crantages 419 du filetage 401 de l'axe de support 1a.

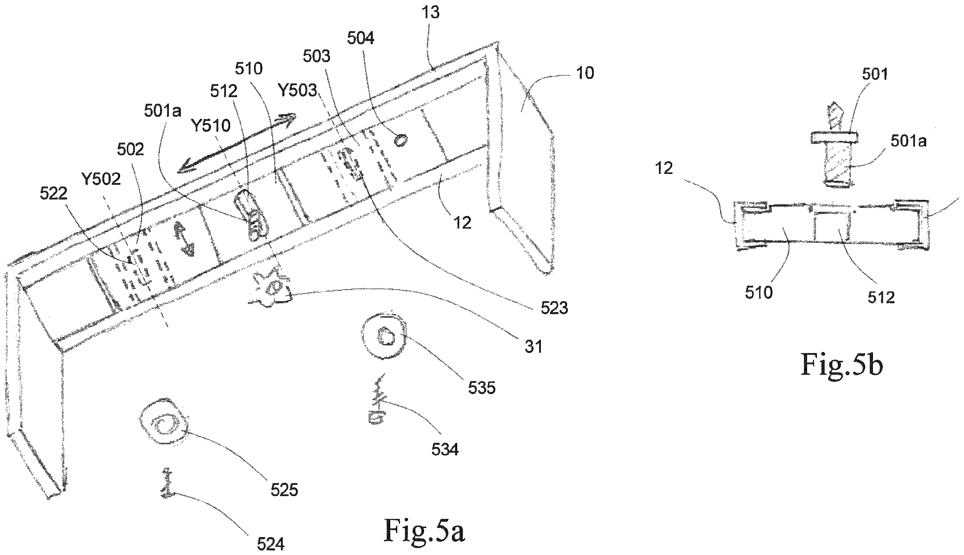

Les figures 5a, 5b illustrent un quatrième mode de réalisation d'un système de fixation ajustable.

Le châssis 10c de l'armature 10 est réalisé à partir de deux corniers 12, 13 présentant chacune une section en forme de C, les ouvertures des deux cornières en C se faisant face. Le châssis 10c de l'armature 10 forme ainsi un rail dans lequel peuvent coulisser et être guidés en translation des cadres de support 2, le long de l'axe principal longitudinal x de l'armature 10. Un premier cadre de support 510 comprend une ouverture oblongue 512, dont la direction Y510 est perpendiculaire à l'axe principal longitudinal x de l'armature 10. Le premier cadre de support 510 est monté avec l'ouverture oblongue 512 autour de l'axe de support 1a. Un premier support 501 central est fixé dans la paroi P et présente un axe de support 501a fileté. Le filetage de l'axe de support 501 constitue le dispositif de maintien (M) du support 1. Le premier cadre de support 510 est fixé par un moyen d'accrochage 531 à l'axe de support 501a. Le moyen d'accrochage 531 prend la forme d'un écrou ou tout autre élément équivalent, qui peut être vissé sur l'axe de support 501a fileté. Avantageusement, le moyen d'accrochage 531 est monté sur l'axe de support 501a tout en laissant un jeu entre le moyen d'accrochage 531, le premier cadre de support 510, le châssis 10c de l'armature 10 et la paroi P. Ainsi, le premier cadre de support 510 étant bloqué en translation le long de l'axe de support 510a d'une part par le moyen d'accrochage 531 et par les cornières 12, 13 du châssis 10c de l'armature 10, le châssis 10c lui-même est maintenu sur le support 501 central et soutenue par le moyen d'accrochage 531. Du fait du jeu laissé sur le moyen d'accrochage 531, le premier cadre de support 510, le châssis 10c et la paroi P, l'installateur a ensuite la possibilité de régler la position du châssis 10c par rapport à l'ouverture, suivant deux directions orthogonales. Le coulissement du premier cadre de support 510 par rapport au châssis 10c suivant l'axe principal longitudinal x permet de déplacer le châssis 10c par rapport au premier support central 501 suivant l'axe principal longitudinal x. La présence de l'ouverture oblongue 512 permet également de déplacer le premier cadre de support 510 et le châssis 10c suivant la direction Y510. Ce premier réglage permet de définir de manière approximative la position de trous de fixation 504 pour le dispositif de verrouillage 4.

L'armature comprend un deuxième support 502 et un troisième support 503, ceux-ci étant montés coulissants dans le rail formé par les cornières 12, 13 du châssis 10c, similairement au premier support 501 central, de préférence de part et d'autre du premier support 501.

Le deuxième 502 et le troisième support 503 comprennent chacun une ouverture oblongue 522, 532 suivant un axe Y522, Y532 parallèle à l'axe Y510, et au travers desquelles peut passer une vis 524, 534 de fixation.

Les fixations ajustables 6 comprennent notamment le deuxième support 502 et le troisième support 503. Des trous de fixation 504 peuvent être percés de manière approximative dans la paroi P, dans lesquelles viennent être vissées les vis de fixation 524, 534. Les fixations ajustables 6 étant mobiles en translation le long du châssis 10c et le châssis 10c étant mobile en translation suivant les axes Y502 et Y503 par rapport aux vis de fixation, l'armature peut être centrée par rapport à l'ouverture, suivant deux directions orthogonales.

Le dispositif de verrouillage 4 comprend les vis de fixation 524, 534 et éventuellement des rondelles 525, 535. Lorsque les vis de fixation 524, 534 sont vissées serrées contre la paroi P, la position des cadres de support 502, 503 et du châssis 10c est bloquée par serrage contre la paroi. Ainsi, de la même manière que dans les modes de réalisation précédents, le montage est facilité, le châssis 10c de l'armature 10 est provisoirement maintenu à la paroi avant d'être positionné suivant deux directions orthogonales et verrouillé dans la position choisie.

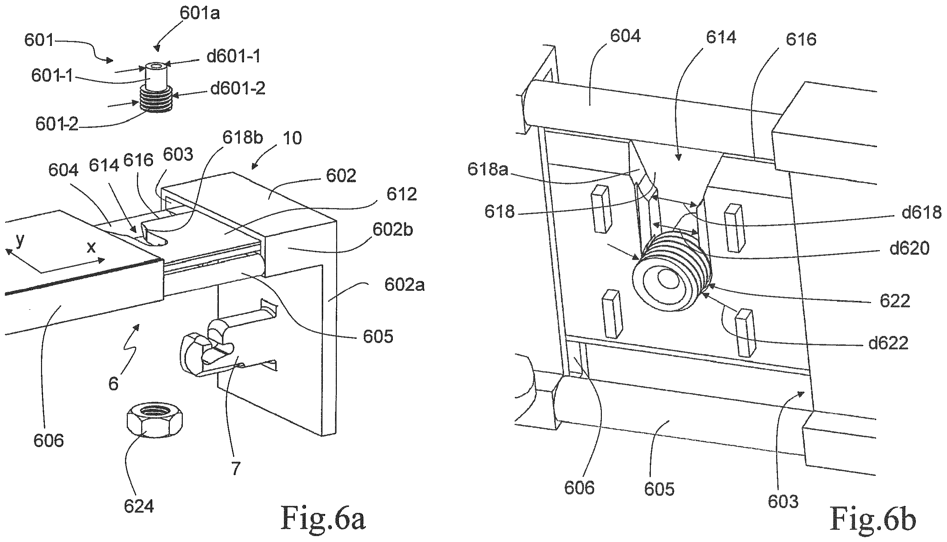

Les figures 6a, 6b illustrent un cinquième mode de réalisation d'un système de fixation ajustable.

Le châssis 10c est réalisé à partir de deux équerres 602 (dont une seule est représentée), formant des pièces d'extrémité du châssis 10c. L'équerre 602 présente une première face 602a, sur laquelle est disposé un crochet 7 permettant de fixer un store à l'armature, et une deuxième face 602b perpendiculaire à la première face 602a. La deuxième face 602b forme un rail 603, ouvert en direction de l'autre équerre 602. Le châssis 10c comprend également un rail central 606, lequel est maintenu sur les équerres et à distance de celles-ci par des poutres latérales 604, 605. Un cadre de support 612 est logé partiellement dans le rail formé par la deuxième face de l'équerre et partiellement dans le rail central. Le cadre de support 2 peut ainsi coulisser et être guidé en translation le long de l'axe principal longitudinal x de l'armature 10 ainsi que le long de l'axe transversal y perpendiculaire à l'axe principal longitudinal x.

Un premier support 601 est fixé dans la paroi P, par exemple par une vis (non représentée) traversant le support et vissée dans la paroi P. Il présente un axe de support 601a au moins partiellement fileté. L'axe de support 601a comprend ainsi une première partie 601-1 filetée ou non, présentant un premier diamètre d601-1 et une deuxième partie 601-2 filetée et présentant un deuxième diamètre d601-2, supérieur au premier diamètre d601-1. Le filetage de la deuxième partie 601-1 correspond à un dispositif de maintien M du support 601 et forme une surépaisseur par rapport au diamètre d601-1 de la première partie 601-1. Les fixations ajustables 6 sont décrites ci-après. Elles comprennent chacune un cadre de support 612 situé à une première extrémité 10a de l'armature 10. Un cadre de support équivalent (non représenté) se situe au niveau d'une deuxième extrémité 10b de l'armature 10. Le cadre de support 612 comprend une ouverture 614 s'étendant à partir d'un bord 616 du cadre de support.

L'ouverture 614 comprend une zone d'entrée 618 et une zone de fond 620. Des parois 618a et 618b de la zone d'entrée 618 guident le déplacement du premier support 601 vers la zone de fond 620. Des parois 620a et 620b délimitent l'ouverture 614 dans la zone de fond 620. La distance d618 minimale entre les parois 618a et 618b est légèrement supérieure au diamètre d601-1 de la première partie 601-1 de l'axe de support 601a mais inférieure au deuxième diamètre 601-2 de la deuxième partie 601-2 de l'axe de support 601a. De même, la distance d620 entre les parois 620a et 620b de la zone de fond 620 est légèrement supérieure au diamètre d601-1 de la première partie 601-1 de l'axe de support 601a mais inférieure au deuxième diamètre 601-2 de la deuxième partie 601-2 de l'axe de support 601a. La zone de fond 620 comprend également un évidement 622 sensiblement circulaire, dans l'épaisseur du premier cadre de support 612, débouchant sur la face du cadre opposée au support. Le diamètre d622 de cet évidement 622 est légèrement supérieur au deuxième diamètre 601-2 de la deuxième partie 601-2 de l'axe de support 601a. L'évidement 622 correspond à un dispositif d'accrochage 31 de la fixation ajustable 6. En effet, lors de l'insertion de l'axe de support 601a dans l'ouverture 614, la deuxième partie filetée 601-2 vient se loger dans l'évidement 622 du cadre de support 601. Du fait du poids du châssis 10c, l'axe de support 601a est bloqué dans le cadre de support 601, ce qui maintient l'armature 10 à la paroi sans besoin d'autre élément. Dans le cas où deux supports 601 sont montés sur une paroi horizontale, telle qu'un plafond, le châssis 10c se trouve alors suspendu aux supports 601, par le biais de deux fixations ajustables 6 coopérant avec les deux supports 601, la deuxième partie 601-2 de l'axe de support 601 ayant un diamètre supérieur à la distance entre les parois 620a et 620b de la zone de fond 620 de l'ouverture 614. Dans le cas où deux supports 601 sont montés sur une paroi verticale, telle qu'un mur, les fixations ajustables 6 de l'armature 10 reposent sur la deuxième partie filetée insérée dans l'évidement 622, maintenant ainsi l'armature sans besoin d'autre élément.

Les fixations ajustables, notamment le cadre de support 601, sont mobiles en translation suivant les axes x et y orthogonaux par rapport à l'armature, du fait de l'existence d'un jeu dans ces deux directions, entre les fixations ajustables 6 et le châssis 10c.

Une fois le châssis 10c de l'armature 10 maintenu par coopération du dispositif de maintien M et du dispositif d'accrochage 31, le châssis 10c conserve une liberté de mouvement par rapport aux supports 601 suivant au moins deux axes orthogonaux, notamment par décalage des fixations ajustables 6 relativement aux rails 613, 606. Une fois le châssis 10c dans la position choisie, il peut être verrouillé en position par serrage. Le dispositif de verrouillage 4 comprend à cet effet un écrou 624, lequel vient se visser sur la deuxième partie 601-2 filetée de l'axe de support 601a. Le vissage de l'écrou 624 sur la deuxième partie 601-2 filetée de l'axe de support 601a plaque le cadre de support 612 de la fixation ajustable 6 contre le châssis 10c de l'armature 10, ainsi que le châssis 10c contre la paroi P. Les fixations ajustables 6 et le châssis 10c sont ainsi verrouillés en position par serrage. Ainsi, de la même manière que dans les modes de réalisation précédents, le montage est facilité, le châssis 10c de l'armature 10 est provisoirement maintenu à la paroi avant d'être positionné suivant deux directions orthogonales et verrouillé dans la position choisie.

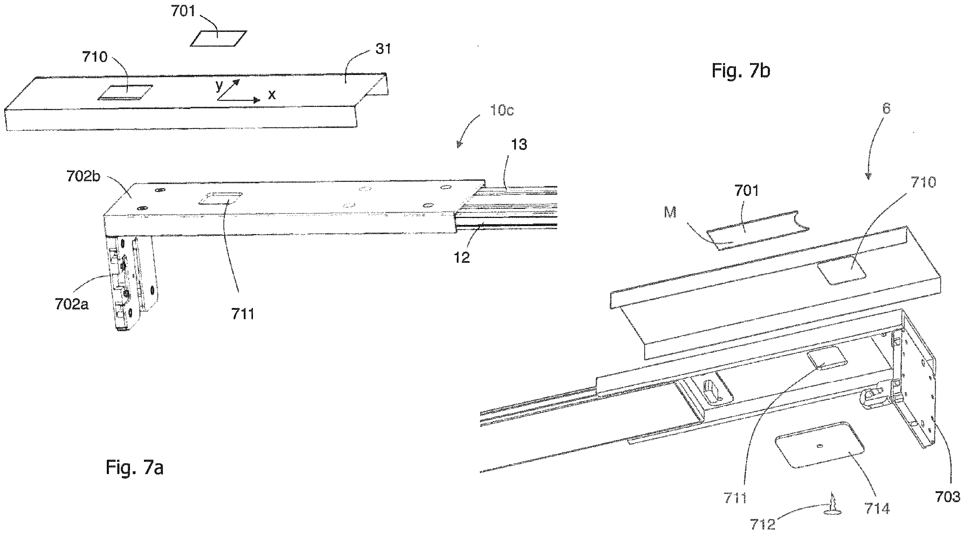

Les figures 7a, 7b illustrent un sixième mode de réalisation d'un système de fixation ajustable.

Le châssis 10c est réalisé à partir de deux équerres 702, 703, formant des pièces d'extrémité du châssis 10c. L'équerre 702 présente une première face 702a, sur laquelle est disposé un crochet 7 permettant de fixer un store à l'armature, et une deuxième face 702b perpendiculaire à la première face 602a. Deux cornières 12, 13 en L sont fixées sur la deuxième face 702b, maintenant ainsi les équerres à une distance choisie l'une par rapport à l'autre. Sur le châssis 10c, principalement réalisé en pièces en aluminium ou équivalent, les propriétés de l'aluminium étant la résistance et la légèreté, est rapporté, de part et d'autre du châssis 10c, un moyen d'accrochage 31 sous la forme d'une plaque métallique ferreuse. Le moyen d'accrochage est rapporté sur au moins une partie de la deuxième face 702b de l'équerre 702 dirigée vers la paroi P et s'étend au moins partiellement sur les cornières 12, 13.

Le moyen d'accrochage 31 comprend également une lumière 710 ayant la forme d'un quadrilatère, par exemple un carré.

Un premier support 701 est fixé à la paroi P, par exemple par collage. Un deuxième support du même type est également rapporté et fixé sur la paroi P. Ces supports sont positionnés approximativement de part et d'autre de la zone où doit être installé le châssis 10c de l'armature 10. Le premier et le deuxième support comprennent une face collante permettant de le solidariser à la paroi P et une face comportant un dispositif de maintien M. Celui-ci prend la forme d'une plaque magnétique. Lors de l'installation du châssis de l'armature au niveau de la paroi, la coopération du dispositif d'accrochage 31 et du dispositif de maintien 31 d'un support 701 permet de maintenir provisoirement le châssis 10c de l'armature 10 à la paroi P.

L'armature comprend un dispositif d'ajustement 32 de la position du châssis 10c par rapport au support 1. En effet, la surface du dispositif d'accrochage 31 est largement supérieure à la surface du dispositif de maintien M. Le châssis 10c peut donc être maintenu provisoirement en plusieurs positions par rapport aux supports 1, tout en conservant une liberté de mouvement par rapport aux supports 701 suivant au moins deux axes orthogonaux. Il peut ainsi être ajusté suivant au moins deux directions orthogonales par rapport à chaque support 701.

Une fois le châssis 10c dans la position choisie, il peut être verrouillé en position par serrage.

En effet, la lumière 710 permet de percer la paroi P dans une position approximative, de visser et de maintenir par serrage le châssis 10c de l'armature contre la paroi P. La lumière 711 est disposée de manière à être en vis-à-vis de la lumière 710. A cet effet, le dispositif de verrouillage 4 comprend au moins une vis 712 et une rondelle 714 dont la surface est supérieure à la surface de la lumière 710. Les fixations ajustables 6 et le châssis 10c sont ainsi verrouillés en position par serrage, la rondelle 714 venant en appui contre le dispositif d'accrochage et/ou les cornières 12, 13 du châssis 10c. Ainsi, de la même manière que dans les modes de réalisation précédents, le montage est facilité, le châssis 10c de l'armature 10 est provisoirement maintenu à la paroi avant d'être positionné suivant deux directions orthogonales et verrouillé dans la position choisie.

La présente invention a pour objet un procédé d'installation d'une armature 10 d'équipement domotique, pourvu d'un système de fixation ajustable tel que décrit ci-dessus. En particulier, le procédé d'installation comporte une première étape de fixation de supports 1 sur la paroi P. Au moins deux supports 1 sont nécessaires au maintien et au réglage de l'armature 10 sur la paroi P, mais trois ou quatre supports 1 peuvent être nécessaires pour les équipements de longue portée, voire plus. Les supports 1 sont disposés selon une ligne droite, avec un intervalle prédéterminé. Un gabarit peut éventuellement être utilisé pour percer les trous dans la paroi P, pour une meilleure précision. Alternativement, des mesures d'entraxes peuvent être reportées sur la paroi P avant perçage. Les supports 1 sont disposés de manière à présenter leur axe de support 1a perpendiculaire à la paroi P. Le procédé d'installation comporte une seconde étape de connexion mécanique du châssis 10c de l'armature 10 aux supports 1. Pour se faire, l'installateur approche le châssis 10c de l'armature 10 à installer près de la paroi P de manière à mettre en contact les fixations ajustables avec l'extrémité des supports 1 correspondants. L'installateur exerce alors une pression suffisante pour permettre la connexion mécanique entre les fixations ajustables et les supports 1. Grâce à l'extrémité biseautée des axes de supports 1a et le libre mouvement des moyens d'ajustement 32 des fixations ajustables 6, la connexion mécanique s'établit automatiquement et permet la suspension du châssis 10c de l'armature 10 à la paroi P.

Le procédé d'installation comporte une troisième étape de réglage de la position du châssis 10c de l'armature 10 par rapport aux supports 1. Cette étape permet d'aligner au mieux l'équipement domotique avec les systèmes de guidage ou les autres éléments de l'assemblage domotique. En particulier, l'installateur peut régler la position du châssis 10c de l'armature 10 selon deux axes de déplacement x, y, tous deux parallèles à la paroi P et perpendiculaires entre eux, en exerçant les pressions nécessaires sur le châssis 10c de l'armature 10 selon l'un ou l'autre des axes de déplacement. Le réglage du positionnement du châssis 10c de l'armature 10 s'effectue grâce aux libres mouvements des moyens d'ajustement 32 des fixations ajustables 6. L'étape de réglage peut en plus comporter le réglage de la position du cadre de support 2 par rapport au châssis 10c de l'armature 10. Ce réglage peut notamment être effectué grâce à la présence de trous oblongs.

Le procédé d'installation comprend une quatrième étape de verrouillage de la position du châssis 10c de l'armature 10 une fois réglée. L'opération de verrouillage s'effectue par le verrouillage des fixations ajustables 6 grâce à leur dispositif de verrouillage 4. Il est parfois possible que le mouvement des moyens d'ajustement 32 soit trop libre, et qu'il ne permette alors pas de maintenir en place le châssis 10c de l'armature 10 avant le verrouillage. Il est alors envisageable d'utiliser le dispositif de verrouillage 4 pour augmenter transitoirement les forces de frictions entre les moyens d'ajustement 32 et faciliter ainsi le réglage de positionnement du châssis 10c de l'armature 10. Le verrouillage est opéré par un serrage, un pré-serrage est envisageable, par exemple en vissant légèrement le dispositif de verrouillage 4. Le verrouillage permet si besoin de verrouille la position du cadre de support par rapport au châssis 10c de l'armature.

Une étape supplémentaire de sécurisation du dispositif de verrouillage 4 peut optionnellement être mise en oeuvre. Dans le cas où le dispositif de verrouillage est un système coulissant 4b tel que décrit dans les figures 3a à 3c, un élément de clippage 46, coopérant avec une languette de clippage 47, peut être prévu pour le maintenir en place, une fois en position.

Le procédé d'installation peut permettre l'installation d'une armature 10 d'équipement domotique munie d'au moins deux fixations ajustables 6 telles que celle décrites ci-dessus.

D'autres fixations peuvent être nécessaires pour la fixation d'un châssis 10c pour un équipement domotique de grande largeur, notamment supérieur à 1m. Une fixation dite folle peut être prévue à cet effet. Dans ce cas, la fixation peut être clippée sur un support 1, de manière similaire à ce qui a été décrit ci-dessus. La fixation folle comprend notamment une platine 312 ou un cadre de support 2 mobile suivant les axes longitudinal x et transversal y, sans nécessiter de dispositif d'ajustement 32 ou de dispositifs de verrouillage 4 tels que décrits pour les fixations ajustables 6. De préférence, une fixation folle sera utilisée en position centrale de l'armature 10, tandis que les fixations ajustables 6 seront utilisées au niveau des extrémités 10a, 10b de l'armature 10.

Selon une variante de réalisation, une fixation ajustable 6 peut présenter des caractéristiques communes aux différents modes de réalisation. En particulier, la fixation ajustable 6 peut comprendre un cadre de support 2 mobile en translation selon l'axe longitudinal à l'armature 10. Le fait que le cadre de support 2 soit mobile permet de le positionner au niveau des supports 1 fixés sur la paroi et de faire coulisser le châssis 10c de l'armature le long des cadres de support 2 pour centrer celle-ci par rapport à l'ouverture. Le cadre de support comprend lui-même une pièce munie d'un trou oblong, s'étendant selon l'axe transversal y. De manière avantageuse, le dispositif d'accrochage 31 comprend une pièce de clippage dont le fonctionnement est similaire à la pièce de clippage 313 du second mode de réalisation et mobile en translation selon l'axe longitudinal par rapport à une platine 312 du cadre de support 2, permet de solidariser facilement le cadre de support 2 dans la rainure du support 1. L'effort élastique sur la pièce de clippage n'empêche pas un ajustement du cadre de support 2 suivant l'axe transversal y permis par le trou oblong.

Un dispositif de verrouillage, similaire à celui des premiers modes de réalisation, comprenant un élément fileté, coopérant avec l'extrémité de l'axe du support 1a, permet le pincement de la pièce de clippage et/ou du cadre de support sur le support 1, ce pincement ayant pour effet supplémentaire d'empêcher le mouvement du cadre de support 2 par rapport au châssis 10c de l'armature 10 et par rapport au support 1. Le mouvement du châssis 10c de l'armature 10, ajustable selon les axes longitudinal et transversal avant le verrouillage peut ainsi être bloqué suivant un ou les deux axes après verrouillage.

Les axes longitudinal x et transversal y sont données à titre indicatif, les axes de degré de liberté des dispositifs d'accrochage, de maintien ou d'ajustement, ou les directions des zones crantées décrites ci-dessus peuvent naturellement être inversées sans changer le fonctionnement du système de fixation ajustable.

## Revendications

1. Procédé d'installation sur une paroi (P), d'une armature (10) d'un équipement domotique sur une paroi (P), comprenant un système de fixation ajustable (S), comportant au moins un support (1) et un dispositif de maintien (M), le support (1) étant apte à être solidarisé à la paroi (P), l'armature (10) comprenant un châssis (10c) et au moins deux fixations ajustables (6) comprenant chacune un dispositif de connexion mécanique (3) comportant un dispositif d'ajustement (32) et un dispositif de verrouillage (4), l'armature (10) comprenant également un dispositif d'accrochage (31) coopérant avec le dispositif de maintien (M) du support (1), le dispositif d'ajustement (32) permettant un ajustement du châssis de l'armature (10) suivant au moins deux directions orthogonales par rapport au support (1), le procédé comprenant les étapes successives suivantes :
a) Fixer au moins un support (1) à la paroi (P),
b) connecter le dispositif d'accrochage (31) de l'armature (10) sur le dispositif de maintien (M) du support (1) correspondant, le châssis (10c) de l'armature (10) se trouvant ainsi auto-supporté par le support,
c) ajuster la position d'une première fixation ajustable (6) suivant deux directions par rapport à au support (1), et
d) verrouiller la position de la première fixation ajustable (6) par rapport au châssis (10c) de l'armature (10),
le procédé étant **caractérisé en ce que** l'étape de verrouillage est une étape de serrage de la fixation ajustable (6) contre le châssis (10c) de l'armature (10) et du châssis (10c) de l'armature contre la paroi (P).

2. Procédé d'installation selon la revendication 1 **caractérisé en ce qu'**il comprend les étapes suivantes :
e) ajuster la position d'une deuxième fixation ajustable (6) suivant deux directions, et
f) verrouiller la position de la première fixation ajustable (6) par rapport au châssis (10c) de l'armature (10).

## Patentansprüche

1. Installationsverfahren eines Rahmens (10) einer Gebäuseautomationsausrüstung an einer Wand (P), umfassend ein einstellbares Befestigungssystem (S), umfassend mindestens eine Halterung (1) und eine Haltevorrichtung (M), wobei die Halterung (1) geeignet ist, um fest mit der Wand (P) verbunden zu werden, der Rahmen (10) umfassend ein Gestell (10c) und mindestens zwei einstellbare Befestigungen (6), jeweils umfassend eine mechanische Verbindungsvorrichtung (3) umfassend eine Einstellvorrichtung (32), und eine Verriegelungsvorrichtung (4), der Rahmen (10) auch umfassend eine Verankerungsvorrichtung (31), die mit der Haltevorrichtung (M) der Halterung (1) zusammenwirkt, wobei die Einstellvorrichtung (32) eine Einstellung des Gestells des Rahmens (10) in mindestens zwei orthogonale Richtungen in Bezug auf die Halterung (1) ermöglicht, das Verfahren umfassend die folgenden aufeinanderfolgenden Schritte:
a) Befestigen mindestens einer Halterung (1) an der Wand (P),
b) Verbinden der Verankerungsvorrichtung (31) des Rahmens (10) mit der Haltevorrichtung (M) der jeweiligen Halterung (1), wodurch das Gestell (10c) des Rahmens (10) selbsttragend von der Halterung getragen wird,
c) Einstellen der Position einer ersten einstellbaren Befestigung (6) in zwei Richtungen in Bezug auf die Halterung (1), und
d) Verriegeln der Position der ersten einstellbaren Befestigung (6) in Bezug auf das Gestell (10c) des Rahmens (10),
wobei das Verfahren **dadurch gekennzeichnet ist, dass** der Verriegelungsschritt ein Schritt eines Festklemmens der einstellbaren Befestigung (6) gegen das Gestell (10c) des Rahmens (10) und des Gestells (10c) des Rahmens gegen die Wand (P) ist.

2. Installationsverfahren nach Anspruch 1, **dadurch gekennzeichnet, dass** es die folgenden Schritte umfasst:
e) Einstellen der Position einer zweiten einstellbaren Befestigung (6) in zwei Richtungen, und
f) Verriegeln der Position der ersten einstellbaren Befestigung (6) in Bezug auf das Gestell (10c) des Rahmens (10).

## Claims

1. An installation method on a wall (P) of the framework structure (10) of a piece of home automation equipment comprising an adjustable fastening system (S), comprising at least a support (1) and a holding device (M), the support (1) being able to be secured to the wall (P), the framework structure (10) comprising a chassis (10c) and at least two adjustable fasteners (6) each comprising a mechanical connection device (3) including an adjusting device (32) and a locking device (4), the framework structure (10) also comprising an attaching device (31) cooperating with the holding device (M) of the support (1), the adjusting device (32) allowing an adjustment of the chassis of the framework structure (10) along at least two directions that are orthogonal relative to the support (1), the method comprising the following successive steps:
a) fastening at least one support (1) to the wall (P),
b) connecting the attaching device (31) of the framework structure (10) on the holding device (M) of the corresponding support (1), the chassis (10c) of the framework structure (10) thus being self-supported by the support,
c) adjusting the position of a first adjustable fastener (6) along two directions relative to a support (1), and
d) locking the position of the first adjustable fastener (6) relative to the chassis (10c) of the framework structure (10),
the method being **characterized in that** the locking step is a step for gripping the adjustable fastener (6) against the chassis (10c) of the framework structure (10) and the chassis (10c) of the framework structure against the wall (P).

2. The installation method according to claim 1, **characterized in that** it comprises the following steps:
e) adjusting the position of a second adjustable fastener (6) along two directions, and
f) locking the position of the first adjustable fastener (6) relative to the chassis (10c) of the framework structure (10).
